# EUROPÄISCHE PATENTANMELDUNG

(11) **EP 4 273 057 A1**
(43) Veröffentlichungstag der Anmeldung: **08.11.2023**
(21) Anmeldenummer: 22171128.6
(22) Anmeldetag: 02.05.2022
(51) Int. Cl.: B65B 35/32, B65B 57/10, B65G 47/22, B65G 57/00, B65G 60/00, B65G 59/06

(54) **VORRICHTUNG ZUR SPEICHERUNG UND ABGABE VON BLISTERPACKUNGEN**

(71) Anmelder: Uhlmann Pac-Systeme GmbH & Co. KG, 88471 Laupheim (DE)
(72) Erfinder: HÄHNEL, Bernd, 88471 Laupheim (DE); BRÄUNIG, Tim, 88471 Laupheim (DE)
(74) Vertreter: Wächter, Jochen

(57) **Zusammenfassung**

Die Vorrichtung (2) zur Speicherung und Abgabe von Blisterpackungen (10) umfasst einen Stapelschacht (4) zur Aufnahme eines Stapels von aufeinander liegenden Blisterpackungen(10) und eine Übergabevorrichtung (6). Der Stapelschacht (4) weist an seinem unteren Ende eine Schließvorrichtung (14) auf, die zwischen einer Schließstellung und einer Öffnungsstellung bewegbar ist. Die Übergabevorrichtung (6) umfasst höhenverstellbare Greifelemente (18), die unterhalb des Stapelschachts (4) angeordnet sind und zwischen sich und dem Stapelschacht (4) einen in der Höhe variablen Aufnahmeraum (8) für Blisterpackungen (10) bilden. Die Übergabevorrichtung (6) ist zwischen einer Haltestellung, in der die Greifelemente (18) die unterste Blisterpackung (10) im Aufnahmeraum (8) gegen die Schwerkraft abstützen, und einer Freigabestellung, in der die Greifelemente (18) die Blisterpackungen (10) im Aufnahmeraum (8) freigeben, bewegbar.

## Beschreibung

Die vorliegende Erfindung betrifft eine Vorrichtung zur Speicherung und Abgabe von Blisterpackungen.

Bei der Verpackung von Stapeln von Blisterpackungen in größere Verpackungseinheiten, beispielsweise in einer Verpackungs- oder Kartoniermaschine, dürfen keine unterschiedlichen Stapelhöhen in den unterschiedlichen Abteilen der Fördervorrichtung auftreten. Blisterpackungen, die von einem vorgelagerten Überprüfungssystem als unvollständig befüllt oder als mit Produkten von nicht ausreichender Qualität befüllt eingestuft werden, werden aber aus dem Produktionsprozess entnommen. Hierdurch kann es zu eben diesen unterschiedlichen Höhen der Stapel von Blisterpackungen kommen, die für die weitere Verarbeitung problematisch sind. Vollständige Leerstellen in einem Abteil der Fördervorrichtung können in modernen Maschinen teilweise durch geeignete Ansteuerung berücksichtigt werden, ohne den Prozessablauf zu stören. Grundsätzlich besteht aber auch der Wunsch, derartige leere Abteile durch Nachlegen von Blisterpackungen zu beseitigen.

Vor diesem Hintergrund existieren bereits viele Arten von Nachlegevorrichtungen, um eine vollständige Anzahl von Blisterpackungen in möglichst jedem Abteil der Fördervorrichtung zu gewährleisten.

Der vorliegenden Erfindung liegt die Aufgabe zugrunde, eine multifunktionelle Vorrichtung zur Speicherung und Abgabe von Blisterpackungen zu schaffen, mit deren Hilfe auf einer Fördervorrichtung transportierte Stapel oder Reihen von Blisterpackungen vervollständigt werden. Die Vorrichtung muss hierbei mit hoher Geschwindigkeit arbeiten, einen sicheren Betrieb gewährleisten und strukturell möglichst einfach aufgebaut sein.

Erfindungsgemäß umfasst die Vorrichtung zur Speicherung und Abgabe von Blisterpackungen einen Stapelschacht zur Aufnahme eines Stapels von aufeinander liegenden Blisterpackungen, wobei der Stapelschacht an seinem unteren Ende eine Schließvorrichtung aufweist, die zwischen einer Schließstellung, in der die Schließvorrichtung die unterste Blisterpackung im Stapelschacht gegen die Schwerkraft abstützt, und einer Öffnungsstellung, in der die Schließvorrichtung die Blisterpackungen im Stapelschacht freigibt, bewegbar ist. Außerdem umfasst die Vorrichtung eine Übergabevorrichtung mit höhenverstellbaren Greifelementen, die unterhalb des Stapelschachts angeordnet sind und zwischen sich und dem Stapelschacht einen in der Höhe variablen Aufnahmeraum für eine oder mehrere aufeinander liegende Blisterpackungen bilden. Die Übergabevorrichtung ist zwischen einer Haltestellung, in der die Greifelemente die unterste Blisterpackung im Aufnahmeraum gegen die Schwerkraft abstützen, und einer Freigabestellung, in der die Greifelemente die Blisterpackungen im Aufnahmeraum freigeben, bewegbar.

Mit dieser Ausgestaltung kann der Aufnahmeraum der Übergabevorrichtung einerseits aus dem Stapelschacht mit Blisterpackungen zum Nachlegen befüllt werden. Ebenso kann die Übergabevorrichtung selbst an anderer Stelle Blisterpackungen aufgreifen, die dann zum Nachlegen an der gewünschten Position verwendet werden. Gleichzeitig ist die Behandlung der Blisterpackungen durch die Vorrichtung besonders schonend, weil die Blisterpackungen im gesamten Prozess keine oder nur sehr geringe Fallstrecken zurücklegen.

In bevorzugter Ausgestaltung weist die Schließvorrichtung mindestens zwei sich gegenüberliegende Schließelemente, insbesondere Finger, auf, welche zur Schließstellung aufeinander zu bewegt werden und zur Öffnungsstellung voneinander weg bewegt werden. Öffnungs- und Schließvorgänge können auf diese Weise besonders schnell und einfach erfolgen.

Die Bewegung der Schließelemente kann allgemein als Schwenkbewegung oder als Linearbewegung ausgeführt werden.

In einer bevorzugten Ausführungsform weist jedes Schließelement eine horizontale Erstreckung in Richtung des gegenüberliegenden Schließelements von zwischen 1 mm und 10 mm, mehr bevorzugt zwischen 2 mm und 8 mm auf.

In einer bevorzugten Ausführungsform beträgt der horizontale Hub oder die horizontale Hubkomponente eines Schließelements zwischen der Schließstellung und der Öffnungsstellung 1 mm bis 20 mm, mehr bevorzugt 2 mm bis 10 mm.

Bevorzugt ist eine schnelle Aktivierung der Schließvorrichtung, weil sie nach dem Öffnungsvorgang meist rasch wieder in die Schließstellung gebracht werden soll, damit nach Abgabe der untersten Blisterpackung vom Stapelschacht in den Aufnahmeraum diese Blisterpackung weiter verarbeitet werden kann, während die darüber liegenden Blisterpackungen durch die Schließvorrichtung im Stapelschacht zurückgehalten werden.

In einer bevorzugten Ausführungsform sind die gegenüberliegenden Schließelemente in der Schließstellung in einem Abstand von zwischen 10 mm und 200 mm, mehr bevorzugt von zwischen 30 mm und 170 mm zueinander angeordnet. Hierdurch wird gewährleistet, dass die Schließelemente als Auflageflächen von Randbereichen der Blisterpackungen dienen, während der Napf oder die Näpfe jeder Blisterpackung in mehr zentralen Bereichen der Blisterpackung nicht mit den Schließelementen in Kontakt kommen.

Es ist bevorzugt, wenn die Schließvorrichtung während des Betriebs der Vorrichtung in Höhenrichtung stationär bleibt. Auf diese Weise werden der Aufbau und die Funktionsweise der Vorrichtung möglichst einfach gehalten.

In einer bevorzugten Ausführungsform weist jedes Greifelement eine horizontale Erstreckung in Richtung des gegenüberliegenden Greifelements von zwischen 1 mm und 10 mm, mehr bevorzugt zwischen 2 mm und 8 mm auf. Weil die Greifelemente eine größere horizontale Erstreckung aufweisen als die Schließelemente, kann die Übergabevorrichtung die Schließvorrichtung außen umgeben. Dies dient dem einfachen Aufbau der Vorrichtung.

In einer bevorzugten Ausführungsform beträgt der horizontale Hub oder die horizontale Hubkomponente eines Greifelements zwischen der Haltestellung und der Freigabestellung 1 mm bis 20 mm, mehr bevorzugt 2 mm bis 10 mm. Hierdurch wird einerseits der Platzbedarf der Vorrichtung minimiert, während andererseits eine sichere Funktion der Vorrichtung gewährleistet bleibt.

Vorzugsweise liegen sich die Greifelemente gegenüber und sind in der Haltestellung in einem Abstand von zwischen 10 mm und 200 mm, mehr bevorzugt von zwischen 30 mm und 170 mm zueinander angeordnet. Die Stützfunktion der Greifelemente betrifft somit lediglich Randbereiche der Blisterpackungen, während die Blisternäpfe in einem zentralen Bereich der Blisterpackungen nicht gestützt werden.

Die Schließvorrichtung weist in einer bevorzugten Ausgestaltung einen Antrieb für die Öffnungs- und Schließbewegung der Schließelemente, besonders bevorzugt in Form eines Servomotors, auf.

Die Übergabevorrichtung weist in bevorzugter Ausgestaltung einen Antrieb für die Öffnungs- und Schließbewegung der Greifelemente, besonders bevorzugt in Form eines Servomotors oder eines pneumatischen Antriebs, auf.

Die horizontale Bewegung der Greifelemente kann allgemein als Schwenkbewegung oder als Linearbewegung ausgeführt werden.

Schließlich weist die Übergabevorrichtung in bevorzugter Ausgestaltung einen Vertikalantrieb für die Greifelemente, besonders bevorzugt in Form eines Servomotors, auf. Hierzu ist an einem Rahmen der Vorrichtung bevorzugt eine Linearführung vorgesehen.

Mit diesen Antrieben wird ein sicherer Betrieb der multifunktionellen Vorrichtung gewährleistet.

Der maximale Vertikalhub eines Greifelements beträgt vorzugsweise zwischen 1 mm und 200 mm, mehr bevorzugt zwischen 10 mm und 200 mm, besonders bevorzugt zwischen 80 mm und 160 mm. Auf diese Weise lässt sich die Höhe des Aufnahmeraums für eine oder mehrere Blisterpackungen variieren und zudem wird gewährleistet, dass durch ein Absenken der Greifelemente über eine Fördervorrichtung eine sanfte Ablage der Blisterpackungen ohne Fallhöhe oder nur mit geringer Fallhöhe erzielt wird.

In bevorzugter Ausgestaltung weist die Vorrichtung eine Steuerung auf, die alle Antriebe der Übergabevorrichtung und der Schließvorrichtung ansteuert.

Die Antriebe der Übergabevorrichtung und der Schließvorrichtung sind getrennt voneinander ansteuerbar.

Von den genannten Antrieben und bewegten Elementen abgesehen ist die Vorrichtung insgesamt vorzugsweise stationär angeordnet. Sie kann aber auch als Ganzes bewegbar sein, beispielsweise in Transportrichtung der Fördervorrichtung.

Insgesamt ist es bevorzugt, wenn an gegenüberliegenden Seitenwänden des Stapelschachts jeweils eine Linearführung für die Vertikalbewegung der Übergabevorrichtung vorhanden ist.

Die horizontale Erstreckung der Schließelemente und Greifelemente entlang des abgestützten Randbereichs der Blisterpackung kann größer, kleiner oder gleich der Abmessung der Blisterpackung in dieser Richtung sein. Schließelemente und Greifelemente können in dieser Richtung durchgängig ausgebildet sein, oder sie können aus einzelnen Teilelementen bestehen, die beabstandet und bevorzugt parallel zueinander angeordnet sind. Wichtig ist in jedem Fall, dass die Blisterpackung an ihrem Randbereich sicher von den Schließelementen bzw. Greifelementen gestützt wird.

Die vertikale Erstreckung jedes Schließelements und Greifelements sollte vorzugsweise 5 mm, mehr bevorzugt 3 mm, besonders bevorzugt 2 mm nicht übersteigen, damit auch Blisterpackungen mit relativ geringer Höhe sicher verarbeitet werden können.

Die in den Blisterverpackungen verpackten Produkte können alle möglichen Arten von Produkten sein. Bevorzugt sind die Produkte Medizinprodukte und insbesondere Liquida-Produkte.

Die Blisterpackungen besitzen in der Regel eine Höhe von zwischen 3 mm und 40 mm, bevorzugt zwischen 8 mm und 40 mm, mehr bevorzugt zwischen 10 mm und 25 mm, und besonders bevorzugt zwischen 10 mm und 20 mm.

Eine Verpackungsmaschine umfasst in der Regel eine Fördervorrichtung zum Transport von Blisterpackungen oder Stapeln von aufeinander liegenden Blisterpackungen und eine Vorrichtung zur Speicherung und Abgabe von Blisterpackungen gemäß der obigen Beschreibung. Dabei ist die Vorrichtung zur Speicherung und Abgabe von Blisterpackungen oberhalb der Fördervorrichtung angeordnet.

Üblicherweise wird die Fördervorrichtung getaktet betrieben. Hierfür kommt eine umlaufende Packgutkette mit unterschiedlichen Abteilen zur Aufnahme der Blisterpackungen oder Stapeln von Blisterpackungen infrage. Ebenfalls ist es möglich, ein Schienensystem vorzusehen, auf dem verschiedene Wagen mit Aufnahmen für die Blisterpackungen einzeln elektromagnetisch angesteuert werden können.

Schließlich ist auch eine kontinuierlich laufende Fördervorrichtung denkbar. In diesem Fall wäre es unter Umständen vorteilhaft, wenn die Vorrichtung zur Speicherung und Abgabe von Blisterpackungen in einem gewissen Umfang horizontal mit der Fördervorrichtung mitbewegt werden kann.

Eine derartige Verpackungsmaschine hat einen Durchsatz von vorzugsweise mindestens 300 Blisterpackungen pro Minute, mehr bevorzugt mindestens 400 Blisterpackungen pro Minute, besonders bevorzugt mindestens 450 Blisterpackungen pro Minute.

Allgemein im Rahmen der Erfindung ist die Vorrichtung zur Speicherung und Abgabe von Blisterpackungen somit für verschiedene Zwecke einsetzbar. Einerseits kann die Vorrichtung selbst mittels der Greifelemente Blisterpackungen von einer Fördervorrichtung aufnehmen und an anderer Stelle wieder auf die Fördervorrichtung absetzen. Ebenso ist es möglich, dass in der Vorrichtung zunächst Blisterpackungen aus dem Stapelschacht in den Aufnahmeraum übergeben werden, welche anschließend auf die Fördervorrichtung abgelegt werden. Auch Kombinationen der beiden Möglichkeiten sind gegeben, d.h. eine Befüllung des Aufnahmeraums sowohl durch Aufgreifen von Blisterpackungen als auch durch Abgabe von Blisterpackungen aus dem Stapelschacht.

Bei allen Übergabevorgängen ist es bevorzugt, wenn die Greifelemente jeweils derart in ihrer Höhe eingestellt werden, dass eine Blisterpackung unmittelbar auf einer anderen Blisterpackung oder auf der Fördervorrichtung abgelegt wird, ohne dass die Blisterpackung eine Fallstrecke zurücklegen muss. Dies betrifft sowohl die Übergabe einer Blisterpackung aus dem Stapelschacht in den Aufnahmeraum als auch die Übergabe einer Blisterpackung aus dem Aufnahmeraum auf die Fördervorrichtung. Geringe Fallstrecken können unter Umständen akzeptabel sein.

Es können jeweils ein oder mehrere Blisterpackungen in einem Schritt aus dem Stapelschacht in den Aufnahmeraum übergeben werden. Ebenfalls können ein oder mehrere Blisterpackungen aus dem Aufnahmeraum nach unten abgegeben werden.

Weitere Merkmale und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform der erfindungsgemäßen Vorrichtung zur Speicherung und Abgabe von Blisterpackungen;
- Fig. 2: ist eine Perspektivansicht der Vorrichtung aus Figur 1 in einer anderen Stellung;
- Fig. 3 bis 6: zeigen einen Teil einer Verpackungsmaschine mit Fördervorrichtung und einer Ausführungsform der erfindungsgemäßen Vorrichtung zur Speicherung und Abgabe von Blisterpackungen, jeweils in verschiedenen Stadien des Nachlegeprozesses.

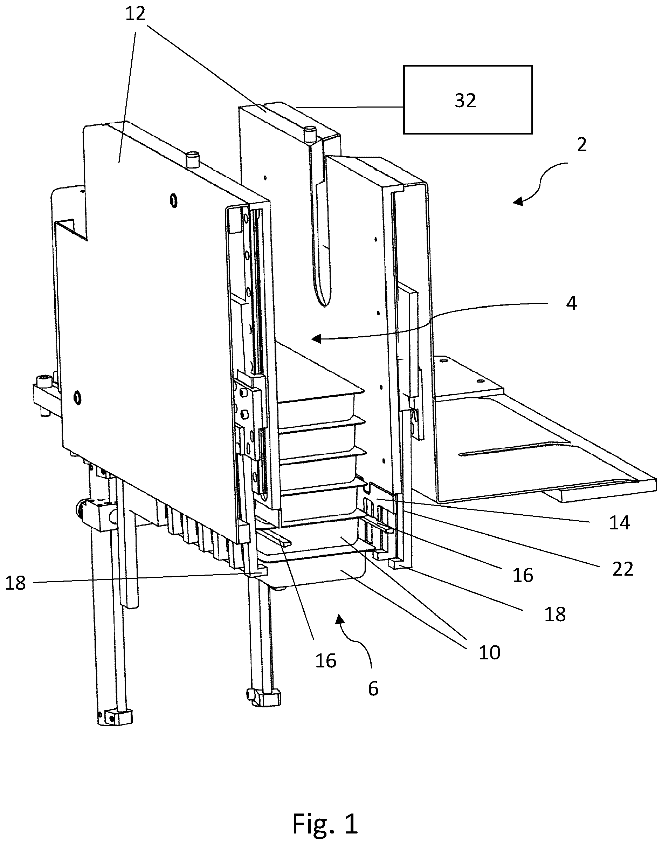

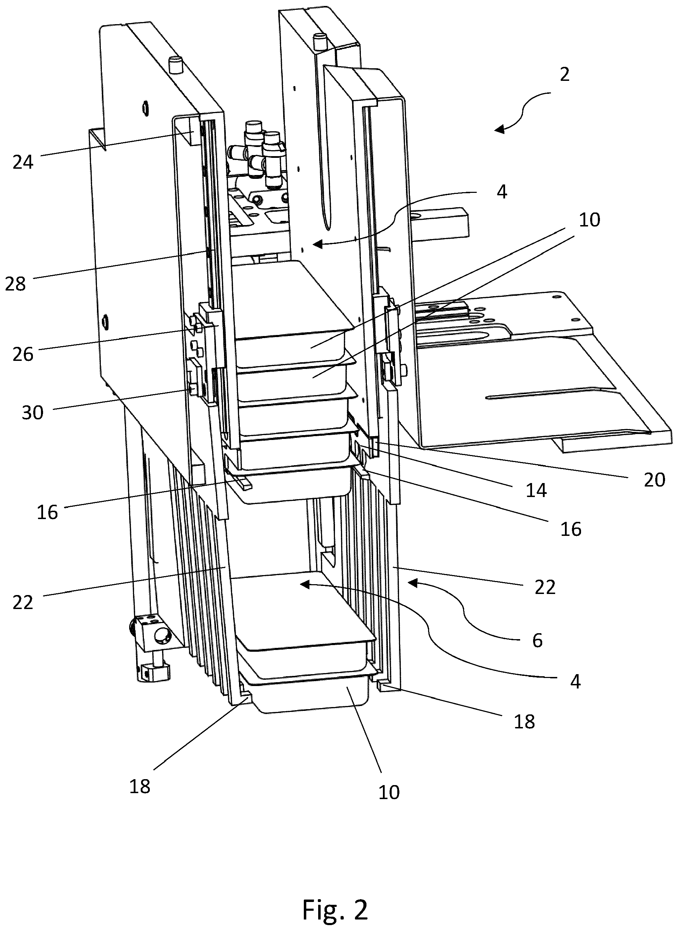

Eine Ausführungsform der erfindungsgemäßen Vorrichtung 2 zur Speicherung und Abgabe von Blisterpackungen ist in Fig. 1 und 2 dargestellt.

Die Vorrichtung 2 umfasst einen Stapelschacht 4 und eine Übergabevorrichtung 6. Die Übergabevorrichtung 6 definiert einen Aufnahmeraum 8 (siehe Fig. 2), der unter dem Stapelschacht 4 angeordnet ist und in Höhenrichtung variabel ist. In Fig. 2 ist der Aufnahmeraum 8 maximal ausgedehnt, während er in Fig. 1 nur eine geringe Höhe aufweist.

Sowohl im Stapelschacht 4 als auch im Aufnahmeraum 8 sind Blisterpackungen 10 angeordnet. Im Stapelschacht 4 liegen die Blisterpackungen 10 mit ihren Breitseiten aufeinander und bilden somit einen Stapel. Im Aufnahmeraum 8 können, wie in Fig. 2 zu sehen ist, auch mehrere Blisterpackungen 10 übereinander liegen und einen Stapel bilden. Der Aufnahmeraum 8 kann aber auch leer sein oder lediglich eine Blisterpackung 10 enthalten.

Im dargestellten Beispielsfall weist der Stapelschacht 4 zwei Seitenwände 12 auf, die den Stapelschacht 4 an zwei gegenüberliegenden Seiten begrenzen. Das untere Ende des Stapelschachts 4 wird durch eine Schließvorrichtung 14 definiert, die zwei sich gegenüberliegende Schließelemente 16 aufweist, auf welchen die unterste Blisterpackung 10 im Stapelschacht 4 abgestützt ist.

Die Übergabevorrichtung 6 weist zwei sich gegenüberliegende Greifelemente 18 auf, auf welchen die unterste Blisterpackung 10 im Aufnahmeraum 8 abgestützt ist.

Die Schließvorrichtung 14 kann eine Öffnungs- und Schließbewegung zur Seite hin ausführen. Dabei werden die Schließelemente 16 voneinander weg bewegt (Öffnungsstellung) bzw. aufeinander zu bewegt in die in Fig. 1 und 2 dargestellte Schließstellung. Die Bewegung der Schließelemente 16 kann als Schwenkbewegung um eine oberhalb der Schließelemente 16 angeordnete Schwenkachse oder als horizontale Linearbewegung ausgeführt sein. Hierzu ist ein Antrieb 20 vorgesehen, der in Fig. 2 lediglich schematisch dargestellt ist. Der Antrieb 20 kann beispielsweise einen Servomotor umfassen. Auch ein Pneumatikantrieb oder ein elektromagnetischer Antrieb kommt in Frage. Vorzugsweise liegen zwei identische Antriebe 20 für die beiden Seiten der Schließvorrichtung 14 vor, die besonders bevorzugt synchron angesteuert sind.

Wie in Fig. 2 dargestellt, sind die Greifelemente 18 der Übergabevorrichtung 6 an vertikal verlaufenden Längsstreben 22 angeordnet, vorzugsweise einstückig mit diesen ausgebildet. Die Greifelemente 18 ragen dabei im Wesentlichen senkrecht von den Längsstreben 22 nach innen ab.

Die Übergabevorrichtung 6 umfasst außerdem mindestens einen Vertikalantrieb 24 (Fig. 2), der beispielsweise einen Servomotor umfassen kann. Ein Schlitten 26, an dem die Längsstreben 22 befestigt sind, ist von dem Vertikalantrieb 24 entlang einer Linearführung 28 an jeder Seitenwand 12 des Stapelschachts 4 verschiebbar. Beispielsweise kann der Schlitten 26 über einen Spindelantrieb oder einen Riemenantrieb verschoben werden. Neben dem Servomotor ist für den Vertikalantrieb 24 auch ein Pneumatikantrieb oder ein elektromagnetischer Antrieb denkbar. Vorzugsweise liegen zwei identische Vertikalantriebe 24 für die beiden Seiten der Übergabevorrichtung 6 vor, die besonders bevorzugt synchron angesteuert sind.

Die Übergabevorrichtung 6 kann auch zwischen einer Haltestellung wie in Fig. 1 und 2 und einer Freigabestellung (nicht dargestellt) bewegt werden. In der Haltestellung stützen die Greifelemente 18 die unterste Blisterpackung 10 im Aufnahmeraum 8, während in der Freigabestellung die im Aufnahmeraum 8 enthaltenen Blisterpackungen 10 zur Ablage freigegeben sind.

Für die Öffnungs- und Schließbewegung werden die Greifelemente 18 zur Seite hin voneinander weg bewegt (Freigabestellung) bzw. aufeinander zu bewegt in die in Fig. 1 und 2 dargestellte Haltestellung. Die Bewegung der Greifelemente 18 kann als Schwenkbewegung um eine zwischen Greifelementen 18 und Schlitten 26 angeordnete Schwenkachse oder als horizontale Linearbewegung ausgeführt sein. Hierzu ist ein Antrieb 30 vorgesehen, der in Fig. 2 lediglich schematisch dargestellt ist. Der Antrieb 30 kann beispielsweise einen Servomotor umfassen. Auch ein Pneumatikantrieb oder ein elektromagnetischer Antrieb kommt in Frage. Vorzugsweise liegen zwei identische Antriebe 30 für die beiden Seiten der Übergabevorrichtung 6 vor, die besonders bevorzugt synchron angesteuert sind.

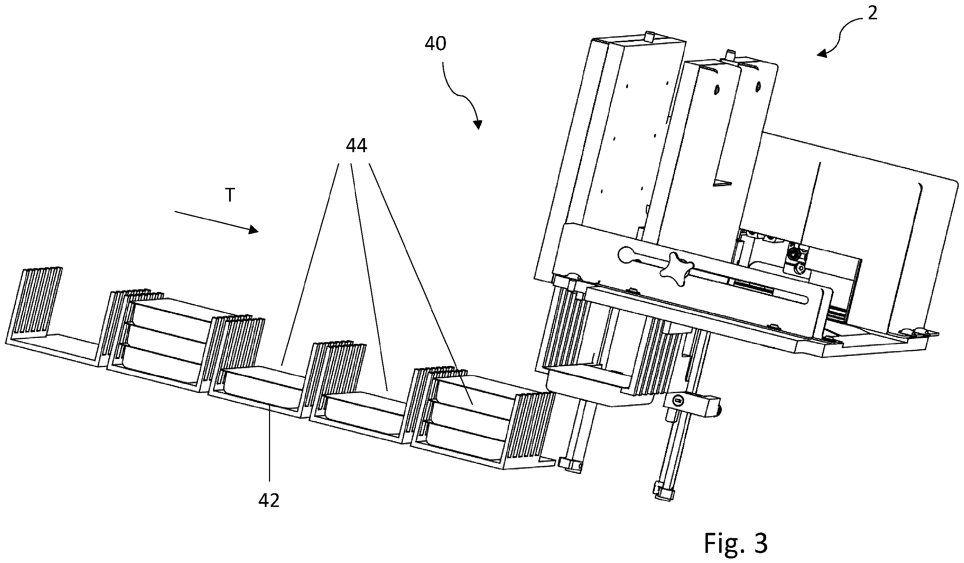

Eine Steuerung 32, die schematisch in Fig. 1 angedeutet ist, steuert vorzugsweise alle Antriebe 20, 24, 30 an. Die Steuerung 32 ist vorzugsweise mit einer zentralen Steuerung der Verpackungsmaschine 40 (Fig. 3 bis 6) verbunden. Die zentrale Steuerung der Verpackungsmaschine 40 umfasst zum Beispiel ein Schieberegister, um jederzeit den Ort einer jeden Blisterpackung 10 nachvollziehen zu können.

In Fig. 3 bis 6 ist eine Verpackungsmaschine 40 dargestellt, die neben der beschriebenen Vorrichtung 2 zur Speicherung und Abgabe von Blisterpackungen 10 zumindest noch eine Fördervorrichtung 42 aufweist. Die Fördervorrichtung 42 umfasst Aufnahmen 44 für Stapel von aufeinander liegenden Blisterpackungen 10.

Außerdem umfasst die Verpackungsmaschine 40 vorzugsweise mindestens eine Überprüfungseinheit (nicht dargestellt) zur Überprüfung der Validität jeder Blisterpackung 10 und eine Ausscheideeinheit (nicht dargestellt) für schlechte Blisterpackungen 10. In jedem Fall muss die Steuerung 32 der Vorrichtung 2 über jedes Fehlen von Blisterpackungen 10 in den Aufnahmen 44 der Fördervorrichtung 42 informiert sein.

Die Funktionsweise der Vorrichtung 2 soll nun anhand der Fig. 3 bis 6 an einem willkürlichen Beispiel mit vier kurz aufeinander folgenden Fehlstellen von Blisterpackungen 10 erläutert werden.

In Fig. 3 wird die Fördervorrichtung 42 in einer Transportrichtung T bewegt. Die zweite und dritte Aufnahme 44 weisen jeweils lediglich eine Blisterpackung 10 auf, während die erste und vierte Aufnahme 44 die in diesem Beispiel gewünschte volle Anzahl von jeweils drei im Stapel aufeinander liegenden Blisterpackungen 10 aufweisen.

Die Vorrichtung 2 umfasst in Fig. 3 im Aufnahmeraum 8 eine Blisterpackung 10. Der Stapelschacht 4 der Vorrichtung 2 soll ebenfalls mit Blisterpackungen 10 gefüllt sein, die in den Fig. 3 bis 6 aber aus Gründen der Vereinfachung nicht dargestellt sind.

Die Übergabe der einen Blisterpackung 10 vom Stapelschacht 4 zum Aufnahmeraum 8 erfolgte dabei zuvor in einer ähnlichen Position der Übergabevorrichtung 6 wie der in Fig. 1 dargestellten Position. Idealerweise werden hierzu die beiden Greifelemente 18 möglichst nahe an die Schließelemente 16 herangefahren oder sie liegen horizontal neben den Schließelementen 16 auf einer Höhe, bevor die Schließelemente 16 in die Öffnungsstellung gebracht werden. Auf diese Weise fällt die unterste Blisterpackung 10 im Stapelschacht 4 lediglich über einen extrem kurzen Fallweg, bevor sie von den Greifelementen 18 aufgefangen wird, oder kommt direkt, d.h. ohne Fallen, auf den Greifelementen 18 zu liegen. Anschließend werden die Greifelemente 18 nach unten gefahren und die Schließelemente 16 wieder zurückgeschwenkt, sodass die nächste Blisterpackung 10 im Stapelschacht 4 wieder auf den Schließelementen 16 zu liegen kommt. Auf diese Weise könnten gleichzeitig auch zwei oder mehr Blisterpackungen 10 vom Stapelschacht 4 an den Aufnahmeraum 8 übergeben werden. Der Zeitpunkt des Zurückschwenkens der Schließelemente 16 bestimmt, wie viele Blisterpackungen 10 abgegeben werden.

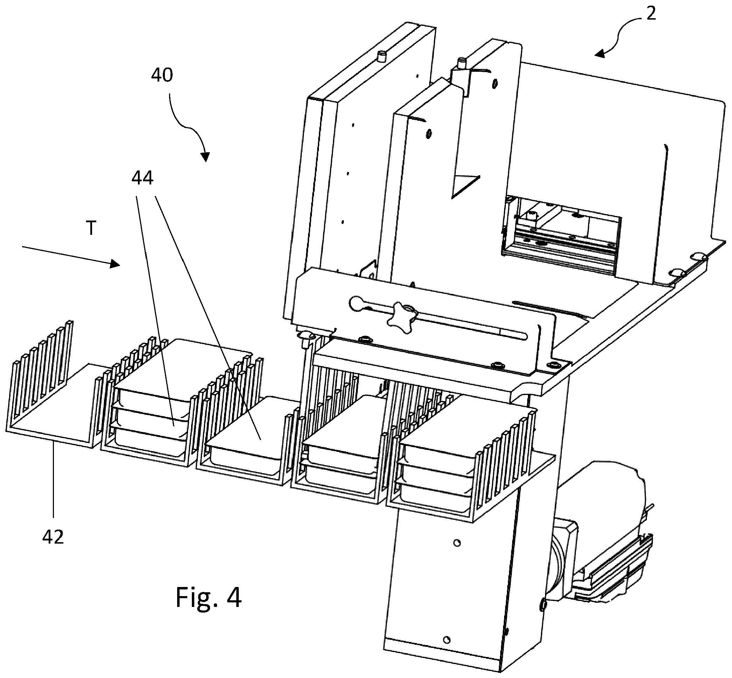

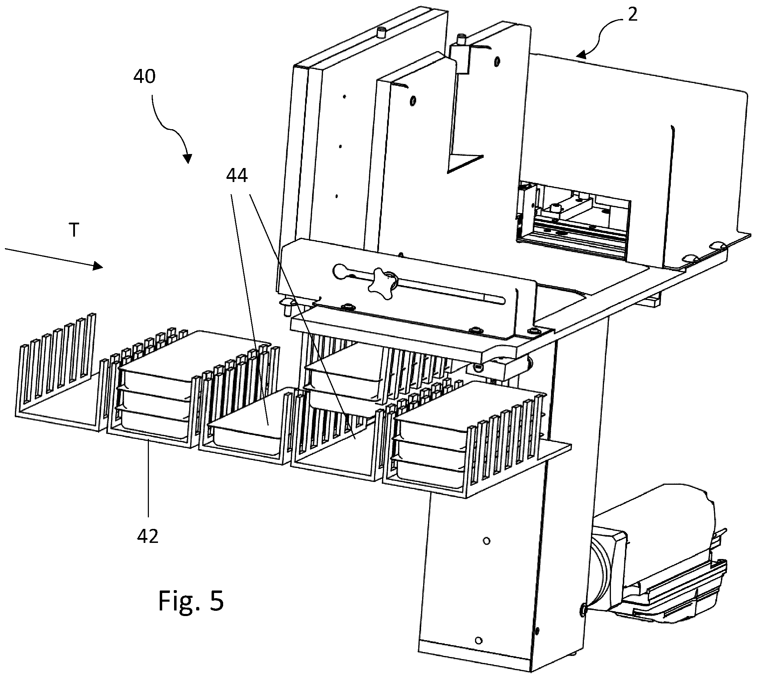

In Fig. 4 ist die Fördervorrichtung 42 weiter in Transportrichtung T bewegt worden. Die Übergabevorrichtung 6 ist nun im Bereich der zweiten Aufnahme 44 der Fördervorrichtung 42 angeordnet, die Greifelemente 18 wurden so weit nach unten abgesenkt, dass die im Aufnahmeraum 8 vorhandene eine Blisterpackung 10 auf der in der Aufnahme 44 vorhandenen einen Blisterpackung 10 abgelegt wird. Die Greifelemente 18 werden anschließend in die Freigabestellung gebracht, woraufhin sie noch weiter abgesenkt werden, um anschließend durch Zurückschwenken in die Haltestellung nunmehr die untere Blisterpackung 10 zu stützen und somit beide übereinander liegenden Blisterpackungen 10 gleichzeitig anheben zu können (siehe Fig. 5).

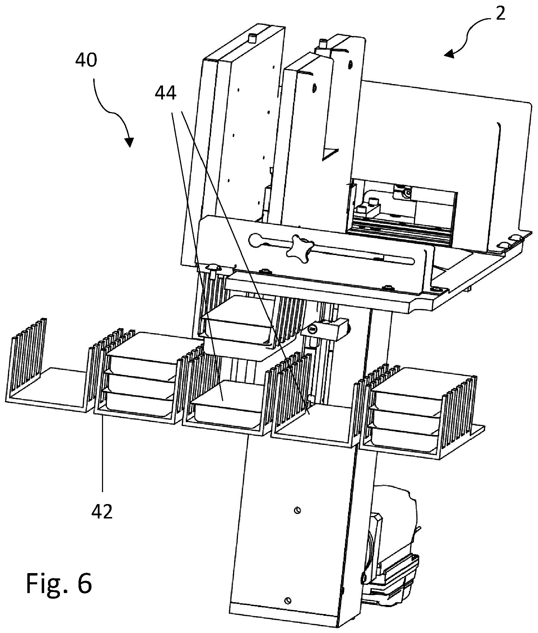

In Fig. 6 ist schließlich die Fördervorrichtung 42 weiter in Transportrichtung T verfahren worden, sodass die Übergabevorrichtung 6 nunmehr über der dritten Aufnahme 44 der Fördervorrichtung 42 angeordnet ist. Hier können nun die Greifelemente 18 sowie die im Aufnahmeraum 8 befindlichen zwei Blisterpackungen 10 in die dritte Aufnahme 44 abgesenkt werden, um dort zusammen mit der bereits vorhandenen einen Blisterpackung 10 einen vollständigen Stapel an Blisterpackungen 10 zu bilden. Nicht mehr dargestellt ist der letzte Schritt, nach Ablage der zwei Blisterpackungen 10 auf die dritte Blisterpackung 10 die Greifelemente 18 in die Freigabestellung zu bringen und anschließend wieder nach oben zu verfahren.

Anhand dieses Beispiels wurden mögliche verschiedene Funktionen der Vorrichtung 2 skizziert, insbesondere das Befüllen von Fehlstellen in der Fördervorrichtung 42 mittels Blisterpackungen 10, die aus dem Stapelschacht 4 stammen, und ebenso das Befüllen von Fehlstellen in der Fördervorrichtung 42 mittels Blisterpackungen 10, die an einer anderen Stelle durch die Greifelemente 18 aufgegriffen wurden.

In der Praxis kann damit eine ganze Menge von unterschiedlichen Nachlegeoptionen durchgeführt werden. Die Steuerung 32 erkennt aufgrund der ihr zur Verfügung stehenden Informationen über Leerstellen in der Fördervorrichtung 42, welche Art von Aktion am besten für eine optimale Auffüllung geeignet ist.

Grundsätzlich ist es erstrebenswert, alle Aufnahmen 44 der Fördervorrichtung 42 mit einer vollständigen Anzahl von Blisterpackungen 10 zu versehen, falls dies innerhalb des gegebenen Zeitintervalls möglich ist. Insbesondere bei Verwendung einzeln ansteuerbarer Schlitten mit jeweils einer Aufnahme 44, wie in Fig. 3 bis 6 angedeutet, kann jedoch auch eine komplett geleerte Aufnahme 44 kompensiert werden, indem dieser Schlitten dann an der nächsten Arbeitsstation ohne weitere Berücksichtigung für die dort normalerweise vorzunehmenden Handlungen vorbeigefahren wird.

## Patentansprüche

1. Vorrichtung (2) zur Speicherung und Abgabe von Blisterpackungen (10) mit
einem Stapelschacht (4) zur Aufnahme eines Stapels von aufeinander liegenden Blisterpackungen (10), wobei der Stapelschacht (4) an seinem unteren Ende eine Schließvorrichtung (14) aufweist, die zwischen einer Schließstellung, in der die Schließvorrichtung (14) die unterste Blisterpackung (10) im Stapelschacht (4) gegen die Schwerkraft abstützt, und einer Öffnungsstellung, in der die Schließvorrichtung (14) die Blisterpackungen (10) im Stapelschacht (4) freigibt, bewegbar ist; und
einer Übergabevorrichtung (6) mit höhenverstellbaren Greifelementen (18), die unterhalb des Stapelschachts (4) angeordnet sind und zwischen sich und dem Stapelschacht (4) einen in der Höhe variablen Aufnahmeraum (8) für eine oder mehrere aufeinander liegende Blisterpackungen (10) bilden, wobei die Übergabevorrichtung (6) zwischen einer Haltestellung, in der die Greifelemente (18) die unterste Blisterpackung (10) im Aufnahmeraum (8) gegen die Schwerkraft abstützen, und einer Freigabestellung, in der die Greifelemente (18) die Blisterpackungen (10) im Aufnahmeraum (8) freigeben, bewegbar ist.

2. Vorrichtung (2) nach Anspruch 1, **dadurch gekennzeichnet, dass** die Schließvorrichtung (14) mindestens zwei sich gegenüberliegende Schließelemente (16), insbesondere Finger, aufweist, welche zur Schließstellung aufeinander zu bewegt werden und zur Öffnungsstellung voneinander weg bewegt werden.

3. Vorrichtung (2) nach Anspruch 1 oder 2, **dadurch gekennzeichnet, dass** jedes Schließelement (16) eine horizontale Erstreckung in Richtung des gegenüberliegenden Schließelements (16) von zwischen 1 mm und 10 mm, bevorzugt zwischen 2 mm und 8 mm aufweist.

4. Vorrichtung (2) nach Anspruch 2 oder 3, **dadurch gekennzeichnet, dass** die gegenüberliegenden Schließelemente (16) in der Schließstellung in einem Abstand von zwischen 10 mm und 200 mm, bevorzugt von zwischen 30 mm und 170 mm zueinander angeordnet sind.

5. Vorrichtung (2) nach einem der Ansprüche 2 bis 4, **dadurch gekennzeichnet, dass** der horizontale Hub oder die horizontale Hubkomponente eines Schließelements (16) zwischen der Schließstellung und der Öffnungsstellung 1 mm bis 20 mm beträgt, vorzugsweise 2 mm bis 10 mm.

6. Vorrichtung (2) nach einem der vorangehenden Ansprüche, **dadurch gekennzeichnet, dass** die Schließvorrichtung (14) während des Betriebs der Vorrichtung (2) in Höhenrichtung stationär bleibt.

7. Vorrichtung (2) nach einem der vorangehenden Ansprüche, **dadurch gekennzeichnet, dass** jedes Greifelement (18) eine horizontale Erstreckung in Richtung des gegenüberliegenden Greifelements (18) von zwischen 1 mm und 10 mm, bevorzugt zwischen 2 mm und 8 mm aufweist.

8. Vorrichtung (2) nach einem der vorangehenden Ansprüche, **dadurch gekennzeichnet, dass** die Greifelemente (18) sich gegenüberliegen und in der Haltestellung in einem Abstand von zwischen 10 mm und 200 mm, bevorzugt von zwischen 30 mm und 170 mm zueinander angeordnet sind.

9. Vorrichtung (2) nach einem der vorangehenden Ansprüche, **dadurch gekennzeichnet, dass** der horizontale Hub oder die horizontale Hubkomponente eines Greifelements (18) zwischen der Haltestellung und der Freigabestellung 1 mm bis 20 mm beträgt, vorzugsweise 2 mm bis 10 mm.

10. Vorrichtung (2) nach einem der vorangehenden Ansprüche, **dadurch gekennzeichnet, dass** die Schließvorrichtung (14) einen Antrieb (20) für die Öffnungs- und Schließbewegung, bevorzugt in Form eines Servomotors, aufweist.

11. Vorrichtung (2) nach einem der vorangehenden Ansprüche, **dadurch gekennzeichnet, dass** die Übergabevorrichtung (6) einen Antrieb (30) für die Öffnungs- und Schließbewegung der Greifelemente (18), bevorzugt in Form eines Servomotors oder eines pneumatischen Antriebs, aufweist.

12. Vorrichtung (2) nach einem der vorangehenden Ansprüche, **dadurch gekennzeichnet, dass** die Übergabevorrichtung (6) einen Vertikalantrieb (24) für die Greifelemente (18), bevorzugt in Form eines Servomotors, aufweist.

13. Vorrichtung (2) nach einem der vorangehenden Ansprüche, **dadurch gekennzeichnet, dass** jedes Greifelement (18) zwischen einer oberen Maximalstellung und einer ausgefahrenen unteren Maximalstellung um einen Vertikalhub von zwischen 1 mm und 200 mm, bevorzugt zwischen 10 mm und 200 mm, mehr bevorzugt zwischen 80 mm und 160 mm verfahrbar ist.

14. Vorrichtung (2) nach einem der vorangehenden Ansprüche, **dadurch gekennzeichnet, dass** sie eine Steuerung (32) aufweist, die alle Antriebe (20, 24, 30) der Übergabevorrichtung (6) und der Schließvorrichtung (14) ansteuert.

15. Verpackungsmaschine (40) mit einer Fördervorrichtung (42) zum Transport von Blisterpackungen (10) oder Stapeln von aufeinander liegenden Blisterpackungen (10) und einer Vorrichtung (2) zur Speicherung und Abgabe von Blisterpackungen (10) nach einem der vorangehenden Ansprüche, die oberhalb der Fördervorrichtung (42) angeordnet ist.
